# EUROPÄISCHE PATENTSCHRIFT

(11) **EP 2 707 611 B1**
(45) Veröffentlichungstag und Bekanntmachung des Hinweises auf die Patenterteilung: **28.06.2017**
(21) Anmeldenummer: 12716349.1
(22) Anmeldetag: 17.04.2012
(51) Int. Cl.: F16C 27/04, F16C 27/08, F16C 39/02, F16C 32/04

(54) **LAGERANORDNUNG MIT EINEM FANGLAGER, INSBESONDERE FÜR EINE LAGERUNG DER SCHNELLDREHENDEN WELLE EINES KOMPRESSORS**
BEARING ARRANGEMENT WITH A BACK-UP BEARING, IN PARTICULAR FOR MOUNTING THE RAPIDLY ROTATING SHAFT OF A COMPRESSOR
ENSEMBLE PALIER COMPORTANT UN PALIER DE RETENUE, EN PARTICULIER POUR LE MONTAGE D'UN ARBRE DE COMPRESSEUR TOURNANT À GRANDE VITESSE

(30) Priorität: 12.05.2011 DE 102011101307
(43) Veröffentlichungstag der Anmeldung: 19.03.2014
(73) Patentinhaber: Schaeffler Technologies AG & Co. KG, 91074 Herzogenaurach (DE)
(72) Erfinder: RUHL, Stefan, 91056 Erlangen (DE); BAUER, Jörg, 91056 Erlangen (DE); SIEBKE, Peter, 91058 Erlangen (DE); BENDER, Armin, 91074 Herzogenaurach (DE); DUDZIAK, Mark, 91074 Herzogenaurach (DE); PAUSCH, Michael, 97456 Dittelbrunn (DE)
(86) Internationale Anmeldenummer: PCT/EP2012/056954
(87) Internationale Veröffentlichungsnummer: WO 2012/152539

(56) Entgegenhaltungen:
- EP-A1- 1 083 349
- WO-A1-97/13985
- JP-A- 11 082 522
- US-A- 4 628 522
- US-A- 5 531 522
- US-B1- 6 661 143

## Beschreibung

### Gebiet der Erfindung

Die Erfindung betrifft eine Lageranordnung mit einem Fanglager, insbesondere als Bestandteil der Lagerung der schnelldrehenden Welle eines Kompressors.

Aus der Praxis sind Lagerungen bekannt, bei denen eine Welle drehbar in beispielsweise Magnetlagern gelagert ist. Die Lagerung umfasst eine Lageranordnung mit einem Fanglager, wobei das mindestens eine Fanglager die Welle aufnimmt, falls das Magnetlager ausfällt. Im normalen Betrieb des mindestens einen Magnetlagers ist zwischen der Mantelfläche der Welle und einer auf die Welle weisenden Mantelfläche des inneren Lagerrings des Fanglagers ein Fanglagerspalt ausgebildet.

Problematisch ist die Aufnahme sehr schnelldrehender Wellen mit hohem Gewicht, beispielsweise die Aufnahme einer mit bis zu ca. 6000 Umdrehungen /Minute drehenden massiven Welle eines Kompressors, in einem Fanglager für den Fall des Ausfallens der Magnetlager der Lagerung. Hierbei treten sehr hohe Kräfte auf, die das Fanglager beschädigen können. Weiter fällt die Welle bezogen auf die Drehachse im normalen Betrieb der Magnetlager der Lagerung exzentrisch in das Fanglager, das somit eine am Umfang ungleichmäßig auftretende Stoßbelastung erfährt.

EP 1 083 349 A1 zeigt ein Magnetlager mit einem Fanglager. Das Fanglager umfasst zwei Kugellager und zwei gewellte, plattenförmige Dämpfungselemente, die in einem ringförmigen Spalt eingesetzt sind, der zwischen dem Fanglager und seinem Halterungselement ausgebildet ist.

WO 97/13985 A1 zeigt ein Magnetlager mit einem Fanglager. Die Welle des Magnetlagers umfasst eine radial abgestellte Bordfläche, welche mit der Innenseite des Innenrings des Fanglagers zusammenwirken kann. Dieses Dokument bildet die Basis für die zweiteilige Form des Anspruchs 1.

### Aufgabe der Erfindung

Es ist die Aufgabe der Erfindung, eine Lageranordnung mit einem Fanglager für eine Welle anzugeben, die insbesondere die bei der Aufnahme von schnelldrehenden, massiven Wellen auftretenden Kräfte besser aufnehmen kann.

### Zusammenfassung der Erfindung

Diese Aufgabe wird erfindungsgemäß gelöst durch eine Lageranordnung nach dem Anspruch 1. Aufgrund der kräftemäßigen Freistellung des Wälzlagers in radialer Richtung nimmt das Wälzlager bevorzugt Kräfte nur in axialer Richtung auf, deren zentrierende Wirkung auf die in das Fanglager fallende Wirkung ausgenutzt werden kann. Das Wälzlager ist in radialer Richtung im wesentlichen als Loslager ausgebildet.

Vorzugsweise ist vorgesehen, dass eine Lageraufnahme vorgesehen ist, an der der Außenring des Wälzlagers angeordnet ist, wobei die Lageraufnahme eine umlaufende Materialschwächung, insbesondere zwei umlaufende Nuten, aufweist. Die umlaufende Materialschwächung reduziert die Aufnahme von Kräften in axialer Richtung nur wenig, bewirkt jedoch eine gezielt eingebrachte Nachgiebigkeit von radial wirkenden Kräften.

Vorzugsweise ist vorgesehen, dass ein Wellbandspalt an dem Außenring des Wälzlagers radial vergrößert ausgebildet ist. Die Breite des Wellbandspaltes kann beispielsweise gezielt verdoppelt oder verdreifacht sein. Aufgrund der deutlich vergrößerte Ausbildung des Wellbandspaltes weicht das als Fanglager vorgesehene Wälzlager in radialer Richtung stärker auf, wenn die Welle in das Fanglager fällt, und gibt Kräfte weniger in radialer als bevorzugt in axialer Richtung weiter. Dies gilt sowohl für den Fall, dass in dem Wellbandspalt ein Wellband angeordnet ist, wie auch für den Fall, dass kein Wellband in dem Wellbandspalt vorgesehen ist, der Wellbandspalt also freibleibt.

Vorzugsweise ist vorgesehen, dass ein Wellband mit reduzierter Steifigkeit, insbesondere mit verminderter Wellenzahl pro Strecke in Umlaufrichtung und / oder mit vergrößerter Wellenamplitude, an dem Außenring des Wälzlagers angeordnet ist. Aufgrund der reduzierten Steifigkeit ist das Wellband gegenüber radial auftretenden Kräften sehr nachgiebig, so dass das Fanglager axiale Kräfte stärker als radiale Kräfte aufnimmt.

Vorzugsweise ist vorgesehen, dass der Außenring des Wälzlagers an einem ersten Teil einer Lageraufnahme befestigt ist, wobei ein zweiter Teil der Lageraufnahme zwischen dem ersten Teil der Lageraufnahme und dem Gehäuse angeordnet ist, und wobei die beiden Teile der Lageraufnahme in radialer Richtung federnd aneinander abgestützt sind. Die Lageraufnahme ist ein zwischen das Fanglager und das ortsfeste Gehäuse angeordnetes Bauteil, das in radialer Richtung zweigeteilt ausgebildet ist, wobei die beiden Teile, also der bezogen auf die Drehachse der Welle radial innenliegende, erste Teil und der radial außenliegende zweite Teil federnd aneinander abgestützt sind. Das Federmittel zwischen den beiden Teilen der Lageraufnahme nimmt dabei vor allem Kräfte in radialer Richtung auf, so dass das Fanglager die Kräfte insbesondere in axialer Richtung aufnehmen und weiterleiten kann.

Vorzugsweise ist vorgesehen, dass der Innenring des Wälzlagers mit der Welle ein erstes Reibflächenpaar und der Außenring des Wälzlagers mit einer Innenfläche einer Lageraufnahme ein zweites Reibflächenpaar ausbildet, wobei die Reibeigenschaften der beiden Reibflächenpaare für eine reibgesteuerte Selbstzentrierung des Innenrings des Wälzlagers bezogen auf die Welle eingestellt sind.

Hinsichtlich der Ausbildung der beiden Reibflächenpaare ist vorzugsweise vorgesehen, dass die Reibeigenschaften des ersten Reibflächenpaars durch Beschichtungen, Beläge, Oberflächenrauhigkeiten bzw. Oberflächenstrukturierungen gegenüber den Reibeigenschaften des zweiten Reibflächenpaars erhöht sind.

Hinsichtlich der Ausbildung der beiden Reibflächenpaare ist vorzugsweise weiter vorgesehen, dass die Reibeigenschaften des zweiten Reibflächenpaars durch Beschichtungen oder verminderte Oberflächenrauhigkeiten herabgesetzt sind.

Erfindungsgemäß ist vorgesehen, dass eine Stirnfläche des Innenrings des Wälzlagers mit einer radial abgestellten Bordfläche an der Welle zusammenwirkt. Im Bereich der Stirnfläche werden insbesondere axiale Kräfte in das Wälzlager eingeleitet. Die Bordfläche und die Stirnfläche bilden ein Führungsflächenpaar aus, das zur Zentrierung des Innenrings durch die in das Fanglager einfallende Welle ausgenutzt werden kann. Insbesondere können die Stirnfläche und die Bordfläche ein erstes Reibflächenpaar ausbilden, dessen Reibeigenschaften gezielt eingestellt werden können, um eine reibungsgesteuerte Zentrierung des Innenrings relativ zu der einfallenden Welle zu erleichtern. Das ist insbesondere auch dann möglich, wenn sowohl die Stirnfläche des Innenrings als auch die Bordfläche an der Welle im wesentlichen radial, also unter einem Winkel von annähernd ca. 90°, zu der Drehachse der Welle ausgerichtet sind.

Erfindungsgemäß ist hinsichtlich der Bordfläche und der Stirnfläche vorgesehen, dass die Bordfläche und die Stirnfläche mindestens abschnittsweise angeschrägt ausgebildet sind und ein Führungsflächenpaar ausbilden. Aufgrund der angeschrägten Ausbildung wird die zentrierte Ausrichtung des Innenrings bezüglich der einfallenden Welle unterstützt.

Vorzugsweise ist hinsichtlich der Bordfläche und der Stirnfläche vorgesehen, dass die Bordfläche und die Stirnfläche einen Winkel, bezogen auf die Drehachse der Welle, insbesondere einen hohen Winkel von mehr als ca. 60°, speziell ca. 75° bis ca. 80°, bezogen auf die Drehachse, einschließen.

Alternativ ist vorzugsweise vorgesehen, dass die Bordfläche abschnittsweise einen Winkel von ca. 45° zu der Drehachse einschließt, und wobei die Stirnfläche einen abgerundeten Abschnitt aufweist, der mit dem angeschrägten Abschnitt der Bordfläche zusammenwirkt. Die Stirnfläche des Innenrings ist abschnittsweise beispielsweise torusballig ausgebildet, wobei der torusballige Abschnitt mit den angeschrägten Abschnitt der Bordfläche zusammenwirkt.

Erfindungsgemäß ist vorgesehen, dass ein Federelement zwischen der Bordfläche und der Stirnfläche angeordnet ist. Das Federelement wird gespannt, wenn die Welle mit der Bordfläche in das Wälzlager mit der. Stirnfläche des Innenrings fällt und unterstützt die Ausrichtung des Innenrings bezogen auf die einfallende Welle. Zur Aufnahme des Federelementes kann der Innenring einen Winkel bezogen auf die Drehachse der Welle aufweisen, beispielsweise einen Winkel von 45°, und die Bordfläche im wesentlichen senkrecht zu der Drehachse der Welle abstehen, so dass ein umlaufender Aufnahmeraum für das Federelement bereitgestellt wird.

Alternativ zu einem Schrägrollenlager, das axiale und radiale Kräfte im wesentlichen in gleichem Maß aufnehmen kann, ist vorzugsweise vorgesehen, dass das Wälzlager als im wesentlichen axial wirkendes Kugellager ausgebildet ist, wobei eine Schmiegung der Laufbahnen der Kugeln an dem Außenring des Wälzlagers mit zunehmenden Abstand von der Drehachse der Welle zunimmt. Bei den hohen Drehzahl, die auftreten, wenn die Welle in dem Fanglager aufgenommen wird, stellt die mit zunehmenden Abstand von der Drehachse zunehmende Schmiegung sicher, dass die Wälzkörper in dem Wälzlager gehalten werden. Der Innenring kann in diesem Fall im wesentlichen eben ausgebildet sein.

Weitere Vorteile und Merkmale ergeben sich aus den abhängigen Ansprüchen sowie aus der folgenden Beschreibung von bevorzugten Ausführungsbeispielen der Erfindung.

Die Erfindung wird im folgenden unter Bezugnahme auf die anliegenden Zeichnungen näher beschrieben und erläutert.

### Kurze Beschreibung der Zeichnungen

- Fig. 1: zeigt schematisch einen Querschnitt durch ein erstes Ausführungsbeispiel einer Lageranordnung,
- Fig. 2: zeigt schematisch einen Querschnitt durch ein zweites Ausführungsbeispiel einer Lageranordnung, wobei rechts unten das Detail 'X' vergrößert dargestellt ist,
- Fig. 3: zeigt einen ausschnittsweisen Querschnitt durch ein drittes Ausführungsbeispiel einer Lageranordnung,
- Fig. 4: zeigt einen ausschnittsweisen Querschnitt durch ein viertes Ausführungsbeispiel einer Lageranordnung,
- Fig. 5: zeigt ausschnittsweise einen Querschnitt durch ein fünftes Ausführungsbeispiel einer Lageranordnung,
- Fig. 6: zeigt ausschnittsweise einen Querschnitt durch ein sechstes Ausführungsbeispiel einer Lageranordnung, und
- Fig. 7: zeigt ausschnittsweise einen Querschnitt durch ein siebtes Ausführungsbeispiel einer Lageranordnung,
- Fig. 8: zeigt ausschnittsweise einen Querschnitt durch ein erfindungsgemäßes Ausführungsbeispiel einer Lageranordnung.

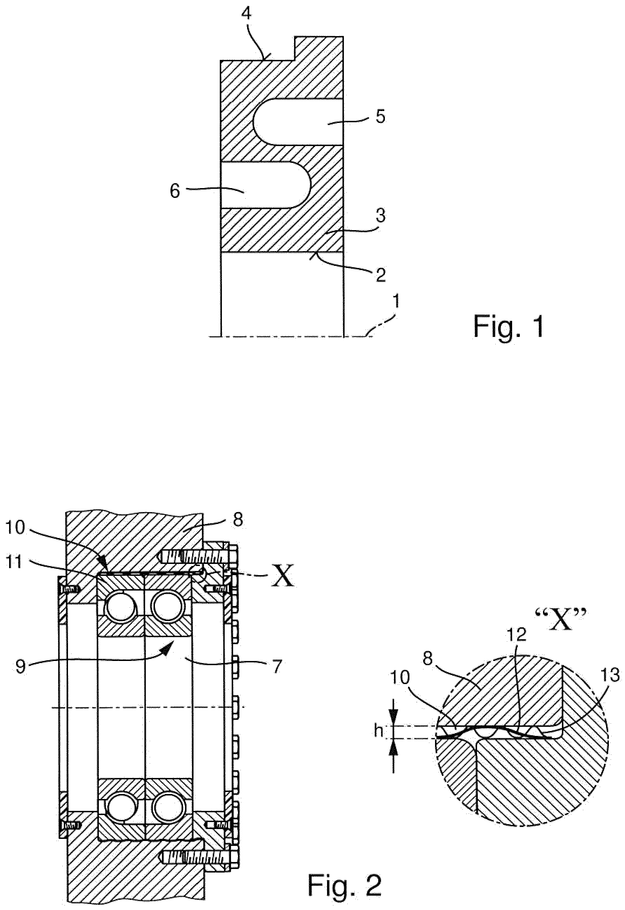

Die Ausführungsbeispiele der Figuren 1 bis 7 entsprechen nicht der Erfindung.

### Detaillierte Beschreibung der Zeichnung

Fig. 1 zeigt eine Lageranordnung, bei der eine Welle um eine Drehachse 1 drehbar mittels Magnetlagern gelagert wird. Die Lageranordnung umfasst mindestens ein Fanglager, das als Wälzlager, speziell aus zweireihiges Schrägkugellager, ausgebildet ist und Kräfte sowohl in axialer als auch in radialer Richtung aufnehmen kann. Ein Außenring des Wälzlagers ist an einer auf die Drehachse 1 weisenden Innenfläche 2 einer Lageraufnahme 3 angeordnet. Die Lageraufnahme 3 ist mit einer Außenfläche 4 an einem ortsfesten Gehäuse angeordnet. Ein Innenring des Wälzlagers ist durch einen Fanglagerspalt von der Mantelfläche der Welle beabstandet, so lange die Welle in den Magnetlagern gelagert ist.

Die Lageranordnung ist Teil der Lagerung einer Welle eines Kompressors, der mit Drehzahlen von ca. 6000 Undrehungen / Minute dreht und massiv ausgebildet ist. Fällt das Magnetlager aus, fällt die Welle in das Fanglager.

Das Wälzlager ist in radialer Richtung im wesentlichen freigestellt, kann also Kräfte insbesondere in axialer Richtung, dagegen in radialer Richtung nur beschränkt aufnehmen und an das Gehäuse weiterleiten. Das Wälzlager ist damit in axialer Richtung steif und in radialer Richtung, senkrecht zu der Erstreckung der Drehachse 1 der Welle, nachgiebig ausgestaltet.

Um das Wälzlager in radialer Richtung im wesentlichen freigestellt anzuordnen, ist vorgesehen, dass die Lageraufnahme 3, an der der Außenring des Wälzlagers angeordnet ist, eine die Drehachse 1 umlaufende Materialschwächung, insbesondere zwei umlaufende Nuten 5, 6, aufweist. Die erste Nut 5 ist an der einen Seite und die zweite Nut an der gegenüberliegenden zweiten Seite 6 der Lageraufnahme 3 ausgebildet, ist jeweils ca. drei Viertel der Erstreckung der Lageraufnahme 3 in Richtung der Drehachse 1 tief, so dass sich die tiefen Abschnitte der beiden Nuten 5, 6 in Blickrichtung senkrecht zu der Drehachse 1 überlappen. Die Nuten 5, 6 reduzieren die Fähigkeit der Lageraufnahme 3 zur Übertragung von axial, parallel zu der Drehachse 1 auftretenden Kräften nur gering. Die Nuten 5, 6 setzen jedoch die Übertragung radial wirkender Kräfte an das Gehäuse deutlich herab.

Die nachfolgend beschriebenen Ausführungsbeispiele beschreiben weitere Möglichkeiten, mit denen vorgesehen sein kann, dass das Wälzlager in radialer Richtung im wesentlichen freigestellt ist. Dabei bezeichnen gleiche Bezugsziffern gleich oder in ihrer technischen Wirkung vergleichbare Merkmale.

Fig. 2 zeigt eine Lageranordnung zur drehbaren Lagerung einer Welle 7 gegenüber einem Gehäuse 8, umfassend ein Fanglager 9, das als Wälzlager ausgebildet ist, wobei das Wälzlager Kräfte in axialer und radialer Richtung aufnehmen kann und insbesondere als Schrägrollenlager, speziell als zweireihiges Schrägkugellager, ausgebildet ist. Damit das Wälzlager 9 in radialer Richtung im wesentlichen freigestellt ist, ist vorgesehen, dass ein Wellbandspalt 10 an dem Außenring 11 des Wälzlagers 9 radial vergrößert ausgebildet ist. Der Wellbandspalt 10 ist, wie das Inset in Fig. 2 vergrößert darstellt, in radialer Richtung, senkrecht zu der Drehachse 1, vergrößert und weist eine radiale Erstreckung h auf, die das ca. Drei- bis Vierfache der üblichen Erstreckung h' beträgt.

Als weitere, ergänzende Maßnahme, damit das Wälzlager 9 in radialer Richtung im wesentlichen freigestellt ist, ist vorgesehen, dass in dem Wellbandspalt 10 ein Wellband 12 mit reduzierter Steifigkeit, insbesondere mit verminderter Wellenzahl w pro Strecke in Umlaufrichtung und / oder mit vergrößerter Wellenamplitude, an dem Außenring 11 des Wälzlagers 9 angeordnet ist. Das Wellband 12 ist als dünnes Metallblech ausgebildet, das die Drehachse 1 der Welle umläuft und Wellen aufweist. Um die Steifigkeit des Wellbandes 12 bei vergleichbarer Blechdicke zu reduzieren, ist vorgesehen, dass die Amplitude h der Wellen, die der Erstreckung des Wellbandspaltes 10 in radialer Richtung entspricht, vergrößert ist, sowie weiter, dass die Zahl der Welle pro Strecke in Umlaufrichtung gegenüber einem Vergleichs-Wellband 13 vergleichbarer Wellenamplitude vergrößert, beispielsweise um einen ganzzahligen Faktor von ca. 3 bis 5, ist.

Alternativ kann vorgesehen sein, ein Wellband als Verbund zweier aneinander befestigter Teil-Wellbänder auszubilden, wobei jedes der beiden Teil-Wellbänder die Drehachse 1 umläuft, so dass der Verbund aus den beiden Teil-Wellbändern eine gegenüber den beiden Teil-Wellbändern reduzierte Steifigkeit aufweist, die Abmessungen der Teil-Wellbänder jedoch beibehält.

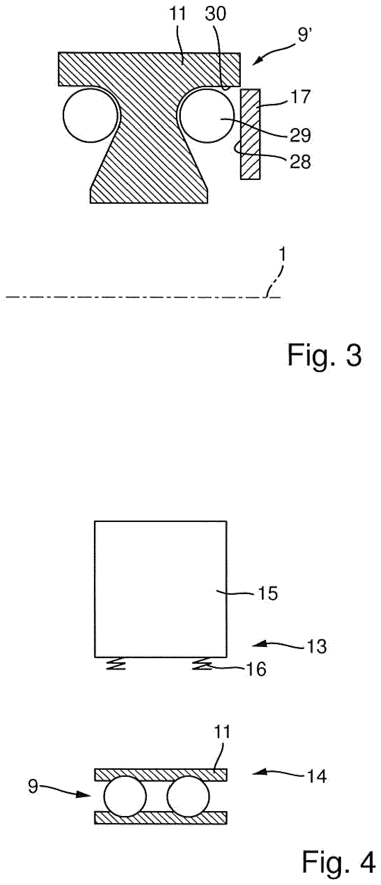

Fig. 4 zeigt eine Lageranordnung mit einer Welle sowie einem als Wälzlager 9 ausgebildeten Fanglager, wobei der Außenring 11 des Wälzlagers 9 an einem ersten Teil 14 einer Lageraufnahme 3 befestigt ist, wobei ein zweiter Teil 15 der Lageraufnahme 3 zwischen dem ersten Teil 14 der Lageraufnahme 3 und dem Gehäuse angeordnet ist, und wobei die beiden Teile 14, 15 der Lageraufnahme 3 in radialer Richtung federnd aneinander abgestützt sind. Insbesondere ist ein Federmittel 16 zwischen den beiden Teilen 14, 15 vorgesehen, das Kräfte in radialer Richtung aufnimmt und eine Übertragung der radialen Kräfte von dem ersten Teil 14 zu dem zweiten Teil 15 unterdrückt. Das zweite Teil 15 ist in dem ersten Teil 14 verschieblich gelagert, insbesondere übergreift das erste Teil 14 das zweite Teil 15 axial außenseitig, so dass axial wirkende Kräfte zwischen den beiden Teilen 14, 15 übertragen werden können.

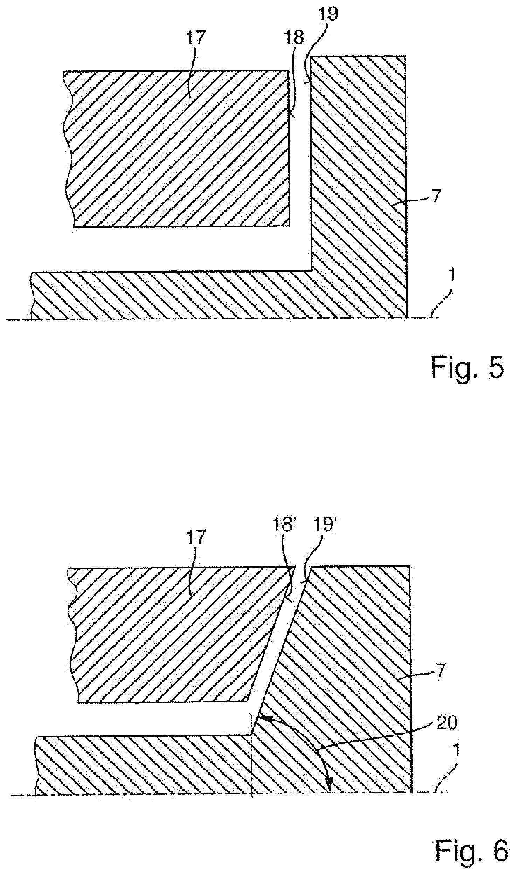

Fig. 5 zeigt ausschnittsweise einen Innenring 17 eines Fanglagers zur Aufnahme einer Welle 7, wobei zur Ausrichtung des Innenrings 17 bezüglich der Welle 7 eine Stirnfläche 18 des Innenrings 17 mit einer radial abgestellten Bordfläche 19 an der Welle 7 zusammenwirkt, um ein Führungsflächenpaar auszubilden.

Die Stirnfläche 18 des Innenrings 17 sowie die Bordfläche 19 an der Welle 7 bilden insbesondere auch einen Teil eines ersten Reibflächenpaares aus, das mit einem zweiten Reibflächenpaar, gebildet aus dem Außenring des Wälzlagers und einer Innenfläche einer Lageraufnahme, wobei die Reibeigenschaften der beiden Reibflächenpaare für eine reibgesteuerte Selbstzentrierung des Innenrings des Wälzlagers bezogen auf die Welle eingestellt sind. Insbesondere ist vorgesehen, dass an der Welle 7, auch im Bereich der Bordfläche 19, sowie an der Stirnfläche 18 des Innenrings 17 sowie an der Mantelfläche des Innenrings 17, die mit der Mantelfläche der Welle 7 in Kontakt kommt, eine Beschichtung oder ein Belag oder eine Oberflächenstrukturierung vorgesehen ist bzw. die Oberflächenrauhigkeit so eingestellt ist, dass die Reibeigenschaften des ersten Reibflächenpaars gegenüber den Reibeigenschaften des zweiten Reibflächenpaars erhöht sind.

Weiter ist vorgesehen, dass die Reibeigenschaften des zweiten Reibflächenpaars durch Beschichtungen oder verminderte Oberflächenrauhigkeiten herabgesetzt sind. Die unterschiedlichen Reibeigenschaften der beiden Reibflächenpaare unterstützen eine Ausrichtung des Innenrings 17 relativ zu der Welle 7.

Fig. 6 zeigt ein bezogen auf Fig. 5 abgewandeltes Ausführungsbeispiel, bei dem vorgesehen ist, dass die Bordfläche 19' und die Stirnfläche 18' angeschrägt ausgebildet sind und ein Führungsflächenpaar ausbilden. Die Stirnfläche 18' sowie die Bordfläche 19' verlaufen parallel und schließen mit der Drehachse 1 einen hohen Winkel 20 von ca. 75° bis ca. 80° ein. Aufgrund der angeschrägten Ausbildung wird der Innenring 17 in eine zentrierte Stellung gedrängt, wenn die Welle 7 mit der Bordfläche 19' in das Fanglager fällt.

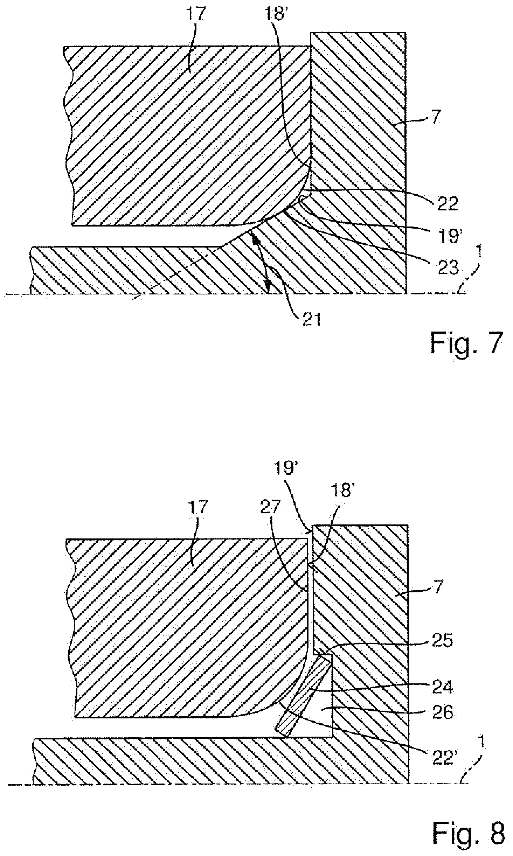

Fig. 7 zeigt ein gegenüber Fig. 5 und Fig. 6 wiederum abgewandeltes Ausführungsbeispiel. Es ist vorgesehen, dass die Bordfläche 19' abschnittsweise einen Winkel 21 von ca. 45° zu der Drehachse 1 einschließt, und wobei die Stirnfläche 18' einen abgerundeten Abschnitt 22 aufweist, der mit dem angeschrägten Abschnitt der Bordfläche 19' zusammenwirkt.

Die Bordfläche 19' weist einen angeschrägten Abschnitt 23 auf, der an die Mantelfläche der Welle 7 angrenzt und der mit der Drehachse 1 einen Winkel von ca. 45° einschließt. Der angeschrägte Abschnitt 23 der Bordfläche 19' wirkt mit einem abgerundeten Abschnitt 22 der Kontur der Stirnfläche 18' des Innenrings 17 zusammen, wobei der abgerundete Abschnitt 22 ein Kreisbogenprofil aufweisen kann.

Fig. 8 zeigt ein gegenüber den Ausführungsbeispielen aus Fig. 5, 6 und 7 erneut abgewandeltes Ausführungsbeispiel, wobei vorgesehen ist, dass ein Federelement 24 zwischen der Bordfläche 19' an der Welle 7 und der Stirnfläche 18' des Innenrings 17 angeordnet ist.

Die Bordfläche 19' ist im wesentlichen senkrecht zu der Drehachse 1 ausgerichtet und umfasst einen in axialer Richtung zurückweichenden Absatz 25, so dass ein Aufnahmeraum 26 für das Federelement 24 ausgebildet wird, das insbesondere als Tellerfeder ausgebildet sein kann.

Die Stirnfläche 18' des Innenrings 17 weist einen ersten, zu der Drehachse 1 im wesentlichen senkrechten Abschnitt 27 sowie einen abgerundeten Abschnitt 22' auf, der insbesondere ein Kreisbogenprofil aufweisen kann. Zwischen den abgerundeten Abschnitt 22', dem Absatz 25 an der Bordfläche 19' und der Mantelfläche der Welle 7 ist in dem Aufnahmeraum 26 das Federelement 24, nämlich die Tellerfeder, angeordnet, die im normalen Betriebszustand der Magnetlager entspannt ist und gespannt wird, wenn die Welle 7 in das Fanglager fällt, insbesondere, wenn die Welle 7 sich dem Innenring 17 des Fanglagers nähert. Das Federelement 24 spannt den Innenring 17 so, dass der Innenring 17 bezogen auf die Welle 7 eine günstige zentrierte Stellung einnehmen kann.

Fig. 3 zeigt ein Ausführungsbeispiel, bei dem vorgesehen ist, dass das als Fanglager vorgesehene Wälzlager 9' als im wesentlichen axial wirkendes Kugellager ausgebildet ist, wobei eine Schmiegung der Laufbahnen der Kugeln an dem Außenring 11 des Wälzlagers 9' mit zunehmenden Abstand von der Drehachse 1 der Welle zunimmt.

Das Kugellager 9' nimmt Kräfte in radialer Richtung nur begrenzt auf und weist einen Druckwinkel auf, der mit der Drehachse einen Winkel von ca. 30° einschließt. Der Innenring des Kugellagers 9' ist als im wesentlichen ebene Scheibe ausgebildet und weist einen flache Innenring-Laufbahn 28 für die Kugeln 29 auf.

Eine Außenring-Laufbahn 30 an dem Außenring 11 des Kugellagers 9' weist ein Profil auf, bei dem eine Schmiegung der Laufbahn, also der Krümmungsradius der Laufbahn, von dem Abstand zu der Drehachse 1 abhängt, Mit zunehmende Abstand zu der Drehachse nimmt die Schmiegung zu, so dass der Krümmungsradius ebenfalls zunimmt und die Außenring-Laufbahn 30 in großen Abstand von der Drehachse 1 zu dieser annähernd parallel verläuft bzw. sich wieder hin zu der Drehachse 1 wendet. Der Innenring 17 ist gegenüber dem Außenring 11 annähernd in radialer Richtung verschieblich, so dass das Kugellager 9' nur Kräfte in axialer Richtung aufnehmen und übertragen kann.

### Bezugszeichenliste

- 1: Drehachse
- 2: Innenfläche
- 3: Lageraufnahme
- 4: Außenfläche
- 5: Nut
- 6: Nut
- 7: Welle
- 8: Gehäuse
- 9: Fanglager
- 10: Wellbandspalt
- 11: Außenring
- 12: Wellband
- 13: Vergleichs-Wellband
- 14: erstes Teil der Lageraufnahme 3
- 15: zweites Teil der Lageraufnahme 3
- 16: Federmittel
- 17: Innenring
- 18, 18': Stirnfläche
- 19, 19': Bordfläche
- 20: Winkel
- 21: Winkel
- 22, 22': abgerundeter Abschnitt
- 23: angeschrägter Abschnitt
- 24: Federelement
- 25: Absatz
- 26: Aufnahmeraum
- 27: senkrechter Abschnitt
- 28: Innenring-Laufbahn
- 29: Kugel
- 30: Außenring-Laufbahn

## Patentansprüche

1. Lageranordnung zur drehbaren Lagerung einer Welle (7) gegenüber einem Gehäuse (8), umfassend eine Welle (7), ein Gehäuse (8) und ein Fanglager (9), das als Wälzlager ausgebildet ist,
wobei das Wälzlager, welches einen Innenring (17) und einen Außenring (11) aufweist, Kräfte in axialer und radialer Richtung aufnehmen kann und insbesondere als Schrägrollenlager oder als zweireihiges Schrägkugellager ausgebildet ist,
wobei das Wälzlager (9) in radialer Richtung im wesentlichen freigestellt ist,
wobei eine Stirnfläche (18) des Innenrings (17) des Wälzlagers (9) mit einer radial abgestellten Bordfläche (19) an der Welle (7) zusammenwirkt,
wobei zumindest die Bordfläche (19') mindestens abschnittsweise angeschrägt ausgebildet ist, und
wobei die Stirnfläche (18') einen abgerundeten Abschnitt (22) aufweist, der mit dem angeschrägten Abschnitt (23) der Bordfläche (19') zusammenwirkt,
**dadurch gekennzeichnet, dass** der angeschrägte Abschnitt (23) der Bordfläche (19') von einem Federelement (24) gebildet ist.

2. Lageranordnung nach Anspruch 1, **dadurch gekennzeichnet, dass** die angeschrägte Bordfläche (19') mit der Drehachse (1) des Wälzlagers (9) einen Winkel (21) von 45° einschließt.

3. Lagerung, insbesondere Lagerung einer Welle eines Kompressors, umfassend eine Lageranordnung nach Anspruch 1 oder 2.

## Claims

1. Bearing arrangement for rotatably supporting a shaft (7) relative to a housing (8), comprising a shaft (7), a housing (8) and a back-up bearing (9) which is in the form of a roller bearing,
wherein the roller bearing, which has an inner ring (17) and an outer ring (11), can take up forces in an axial and radial direction and is in particular in the form of an angular roller bearing or of a two-row angular ball bearing, wherein the roller bearing (9) is substantially free in a radial direction,
wherein an end face (18) of the inner ring (17) of the roller bearing (9) cooperates with a radially offset edge face (19) on the shaft (7),
wherein at least the edge face (19') is formed so as to be at least partially inclined, and
wherein the end face (18') has a rounded portion (22) which cooperates with the inclined portion (23) of the edge face (19'),
**characterized in that** the inclined portion (23) of the edge face (19') is formed by a resilient element (24).

2. Bearing arrangement according to Claim 1, **characterized in that** the inclined edge face (19') defines an angle (21) of 45° with the rotation axis (1) of the roller bearing (9).

3. Bearing, in particular bearing of a shaft of a compressor, comprising a bearing arrangement according to Claim 1 or 2.

## Revendications

1. Ensemble palier pour le support rotatif d'un arbre (7) par rapport à un boîtier (8), comprenant un arbre (7), un boîtier (8) et un palier de retenue (9) qui est réalisé sous forme de palier à roulement, le palier à roulement, qui présente une bague intérieure (17) et une bague extérieure (11), pouvant recevoir des forces dans la direction axiale et dans la direction radiale et étant réalisé notamment sous forme de palier à rouleaux obliques ou sous forme de roulement à billes à contact oblique à deux rangées, le palier à roulement (9) étant placé essentiellement librement dans la direction radiale, une surface frontale (18) de la bague intérieure (17) du palier à roulement (9) coopérant avec une surface de bord (19) inclinée radialement sur l'arbre (7), au moins la surface de bord (19') étant réalisée au moins en partie sous forme biseautée et la surface frontale (18') présentant une portion arrondie (22) qui coopère avec la portion biseautée (23) de la surface de bord (19'), **caractérisé en ce que** la portion biseautée (23) de la surface de bord (19') est formée par un élément de ressort (24).

2. Ensemble palier selon la revendication 1, **caractérisé en ce que** la surface de bord biseautée (19') forme avec l'axe de rotation (1) du palier à roulement (9) un angle (21) de 45°.

3. Support sur palier, en particulier support sur palier d'un arbre de compresseur, comprenant un ensemble palier selon la revendication 1 ou 2.
